# EUROPEAN PATENT APPLICATION

(11) **EP 1 426 261 A1**
(43) Date of publication of application: **09.06.2004**
(21) Application number: 03257546.6
(22) Date of filing: 01.12.2003
(51) Int. Cl.: B60T 8/40, F04B 1/04

(54) **Pump for anti-lock brake systems**

(30) Priority: 06.12.2002 KR 2002077189
(71) Applicant: Mando Corporation, Pyungtaek-si, Kyongki-do (KR)
(72) Inventor: Yang, I-Jin, Pyungteak-City Kyonggi-Do (KR)
(74) Representative: Pratt, David Martin

(57) **Abstract**

A pump for anti-lock brake systems, which has inlet and outlet check valves (37;34) with improved structures capable of enhancing the operational performance of the pump while drawing or discharging brake oil into or from the pump. In the pump for the anti-lock brake systems, the outlet check valve (34) is a ring-shaped elastic body that is installed in an outlet path (42). The outlet check valve (34) is elastically deformed to discharge brake oil during an oil-discharging mode, and elastically restores an original shape thereof to prevent a reverse flow of the discharged brake oil during an oil-drawing mode. The pump thus prevents the reverse flow of the brake oil, reduces operational noise, and simplifies a process of producing elements of the pump, resulting in a reduction in the production costs of the pump, due to the inlet and outlet check valves (37;34).

## Description

### CROSS-REFERENCE TO RELATED APPLICATION

This application claims the benefit of Korean Patent Application No. 2002-77189, filed December 6, 2002 in the Korean Intellectual Property Office, the disclosure of which is incorporated herein by reference.

### BACKGROUND OF THE INVENTION

### 1. Field of the Invention

The present invention relates, in general, to anti-lock brake systems and, more particularly, to a pump for the anti-lock brake systems which reciprocates by an operation of a drive motor, thus pumping brake oil while pressurizing the brake oil in the anti-lock brake systems.

### 2. Description of the Related Art

Generally, brake systems for automobiles are mechanisms which reduce the speed of the automobiles by means of a braking force produced by pressurized brake oil. A conventional brake system for automobiles includes a vacuum booster and a master cylinder, with a plurality of hydraulic brakes respectively provided at the front and rear wheels of an automobile. When a driver depresses a brake pedal while driving the automobile having the conventional brake system, the vacuum booster which is located between the brake pedal and the master cylinder increases the amount of pressure applied to a piston within the master cylinder, thus producing a brake oil pressure. The brake oil pressure is transmitted to the hydraulic brakes of the front and rear wheels, thus producing a braking force to reduce the speed of the automobile. However, when the braking force produced by the depressing of the brake pedal is higher than friction between tires of the wheels and a road, there may occur a wheel slip, whereby the wheels slip over the road.

In an effort to efficiently brake the automobiles and thereby to safely reduce the speed of the automobiles while efficiently preventing a wheel slip, anti-lock brake systems have been widely used in automobiles.

A conventional anti-lock brake system for automobiles includes a plurality of accumulators, pumps and solenoid valves which control the brake oil pressure which is transmitted to the hydraulic brakes provided at the front and rear wheels of an automobile. The conventional anti-lock brake system further includes an electronic control unit (ECU) 65 which controls the operations of electronic drive elements provided in the anti-lock brake system. In the conventional anti-lock brake system, the pumps feed brake oil to the hydraulic brakes or store the brake oil in an oil storage compartment of the brake system, thus controlling the brake oil pressure in the brake system.

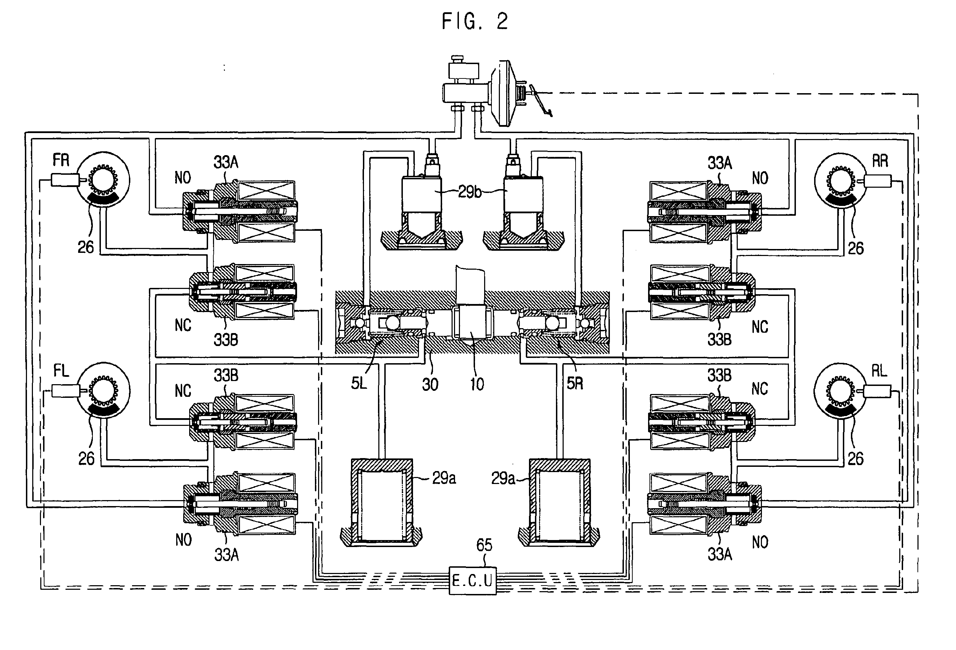

As shown in FIG. 2, the conventional anti-lock brake system includes a vacuum booster and a master cylinder, with a plurality of hydraulic brakes 26 respectively provided at the front and rear wheels of an automobile. The conventional anti-lock brake system further includes a plurality of solenoid valves 33A and 33B, a pair of low-pressure accumulators 29a, a pair of pumps 5R and 5L, a drive motor 10, and a pair of high-pressure accumulators 29b. The solenoid valves 33A and 33B control the brake oil pressure which is transmitted to the hydraulic brakes 26 of the front and rear wheels. The low-pressure accumulators 29a temporarily store the brake oil discharged from the hydraulic brakes 26, during a braking operation with a reduced pressure. The pumps 5R and 5L pump the brake oil from the low-pressure accumulators 29a, during a braking operation with an increased/maintained pressure. The drive motor 10 drives the pumps 5R and 5L at the same time. The high-pressure accumulators 29b are located at the outlet sides of the pumps 5R and 5L to attenuate a pressure pulsation of the pressurized brake oil pumped from the low-pressure accumulators 29a by the pumps 5R and 5L. The above-mentioned solenoid valves 33A and 33B, low-pressure accumulators 29a, pumps 5R and 5L, drive motor 10 and the high-pressure accumulators 29b are embedded within an aluminum modulator block 30 which has a rectangular hexahedral shape.

The pair of pumps 5R and 5L are operated with a predetermined phase difference by the motor 10, thus pumping the brake oil from the low-pressure accumulators 29a to the high-pressure accumulators 29b.

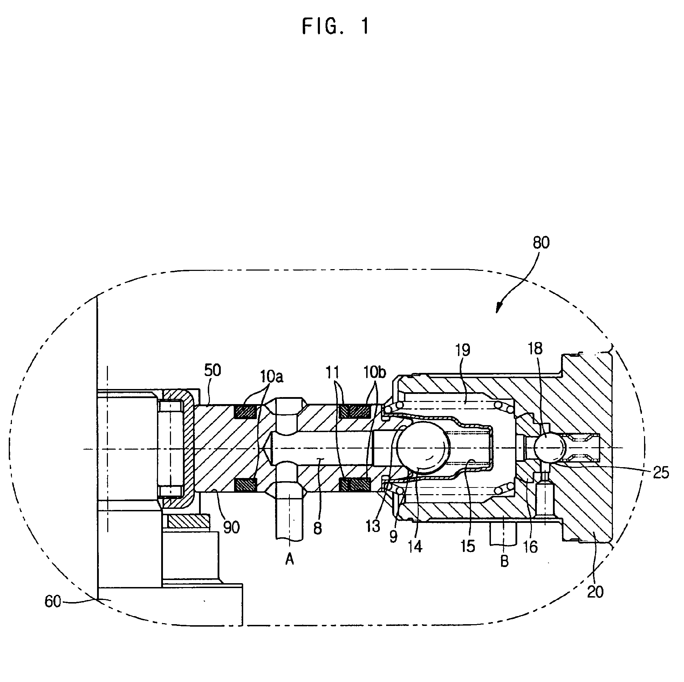

As shown in FIG. 1, conventional pumps 5R and 5L for anti-lock brake systems are installed in a bore 90 which is formed in a modulator block 80, so that the pumps 5R and 5L reciprocate within the bore 90 by an operation of an eccentric shaft of a drive motor 60. To fabricate the conventional pumps 5R and 5L, a plug 20 and a piston 50 are inserted in the bore 90 on each side, based on the drive motor 60. In a detailed description, each of the pumps 5R and 5L has the piston 50 provided with an inlet path 8. The pump 5R, 5L further includes both an inlet closing body 14 and an inlet check valve 9 which cooperate to open or close an inlet valve seat 13 of the inlet path 8, according to a position of the piston 50 within the bore 90. The inlet closing body 14 is biased in a predetermined direction toward the motor 60 by a spring 15 which is supported by a spring retainer provided at a first end of the piston 50.

The piston 50 has the inlet check valve 9 at the first end thereof, with first and second sealing members 10a and 10b fitted over an outer circumferential surface of the piston 50 to prevent a leakage of brake oil from a gap between the outer circumferential surface of the piston 50 and an inner circumferential surface of the bore 90. The pump 5R, 5L further includes a backup ring 11 which is fitted over the outer circumferential surface of the piston 50 at a position close to the second sealing member 10b, as shown in FIG. 1, thus preventing excessive wear of the second sealing member 10b.

The modulator block 80 further includes an inlet port A through which the inlet of the inlet path 8 communicates with an outlet of an associated low-pressure accumulator, and an outlet port B through which an outlet of an outlet path having an outlet check valve 25 communicates with an inlet of an associated high-pressure accumulator.

During an operation of the pump 5R, 5L, the piston 50 axially reciprocates within the bore 90 by an operation of the eccentric shaft of the motor 60, thus causing a variation in the pressure of the bore 90 and alternately opening and closing the inlet and outlet check valves 9 and 25. The brake oil is thus pressurized and pumped to the associated high-pressure accumulator 29b.

In the above state, because the first and second sealing members 10a and 10b rectilinearly reciprocate together with the piston 50 along the inner circumferential surface of the bore 90 while being in close contact with the inner circumferential surface of the bore 90, thus preventing a leakage of the brake oil from the junction between the facing circumferential surfaces of the piston 50 and the bore 90 to the motor 60.

However, the conventional pump for anti-lock brake systems is problematic in that the first and second sealing members 10a and 10b must repeat the rectilinear reciprocating motion together with the piston 50 within the bore 90 while being in close contact with the inner circumferential surface of the bore 90, thus the first and second sealing members 10a and 10b are worn to allow an undesired leakage of the brake oil to the motor 60.

Furthermore, the outlet check valve 25 to prevent a reverse flow of the discharged brake oil during a pumping operation of the conventional pump 5R, 5L is fabricated with an outlet valve seat 16 and the ball-shaped outlet closing body 18 which is in contact with the outlet valve seat 16 so as to open or close an outlet path, so that there occurs a partial side wear on both the outlet valve seat 16 and the ball-shaped outlet closing body 18 due to repeated contact between them during the operations of the pump 5R, 5L. Therefore, the brake oil discharged from the pump 5R, 5L may flow in a reverse direction through a gap between the outlet valve seat 16 and the ball-shaped outlet closing body 18, thereby producing air bubbles in the brake oil to reduce pumping efficiency and generate noise during the operation of the pump.

### SUMMARY OF THE INVENTION

Accordingly, it is an aspect of the present invention to provide a pump for anti-lock brake systems, which has inlet and outlet check valves with improved structures capable of enhancing the operational performance of the pump while drawing or discharging brake oil into or from the pump, and which prevents a reverse flow of the brake oil, reduces operational noise, and simplifies a process of producing elements of the pump, resulting in a reduction in the production costs of the pump, due to the check valves.

Additional aspects and/or advantages of the invention will be set forth in part in the description which follows and, in part, will be obvious from the description, or may be learned by practice of the invention.

The above and/or other aspects are achieved by providing a pump for anti-lock brake systems, including: a piston installed in a bore of a modulator block so as to rectilinearly reciprocate in the bore by an eccentric rotation of an eccentric shaft of a drive motor; a plug mounted to the bore to be opposite to the piston; a return spring placed between the piston and the plug to elastically bias the piston in a predetermined direction relative to the plug; an outlet path defined between an inner circumferential surface of the bore and an outer circumferential surface of the plug; and an outlet check valve installed in the outlet path, the outlet check valve being elastically deformed to discharge brake oil during an oil-discharging mode, and elastically restoring an original shape thereof to prevent a reverse flow of the discharged brake oil during an oil-drawing mode.

The outlet check valve may include a ring-shaped elastic body, with an annular groove formed along a central line of an end surface of the ring-shaped elastic body, so that the outlet check valve is elastically deformed and elastically restores the original shape thereof, according to a pressure of the brake oil acting on the outlet check valve.

The plug may include an inlet port to draw the brake oil into the pump; an inlet path to guide the brake oil from the inlet port; a closing body installed in an enlarged diameter part of the inlet path to open or close the inlet path; an inlet valve seat provided on a predetermined intermediate portion of the inlet path to be in contact with the closing body, thus opening or closing the inlet path in conjunction with the closing body; a support spring to elastically bias the closing body in a predetermined direction; and a spring retainer to maintain both the closing body and the support spring within the enlarged diameter part of the inlet path.

The pump may further include a sealing member placed around the outer circumferential surface of the plug, thus preventing a leakage of the brake oil through a junction between the inner circumferential surface of the bore and the outer circumferential surface of the plug.

### BRIEF DESCRIPTION OF THE DRAWINGS

These and other aspects and advantages of the invention will become apparent and more readily appreciated from the following description of the preferred embodiments, taken in conjunction with the accompanying drawings of which:
FIG. 1 is a sectional view showing a construction of a conventional pump for anti-lock brake systems;
FIG. 2 is a hydraulic circuit of an anti-lock brake system having a pump, according to the present invention;
FIG. 3 is a sectional view showing a construction of a pump used in the anti-lock brake system of FIG. 2, according to a first embodiment of the present invention;
FIG. 4A is a sectional view of the pump of FIG. 3, when a piston of the pump is placed at a top dead center;
FIG. 4B is a sectional view of the pump of FIG. 3, when the piston of the pump is placed at a bottom dead center; and
FIG. 5 is a sectional view showing a construction of a pump used in the anti-lock brake system of FIG. 2, according to a second embodiment of the present invention.

### DETAILED DESCRIPTION OF THE PREFERRED EMBODIMENTS

Reference will now be made in detail to the present preferred embodiments of the present invention, examples of which are illustrated in the accompanying drawings, wherein like reference numerals refer to like elements throughout. The embodiments are described below in order to explain the present invention by referring to the figures.

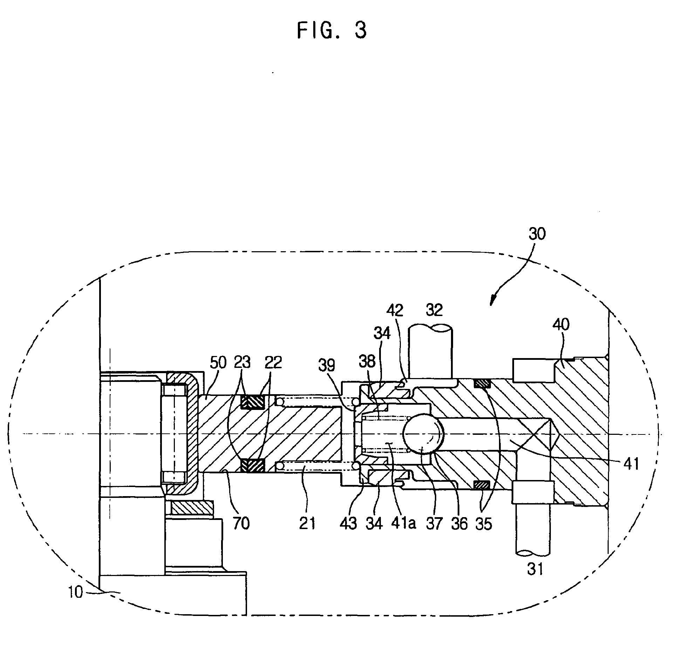

FIG. 2 is a hydraulic circuit of an anti-lock brake system, according to the present invention. FIG. 3 is a sectional view showing a construction of a pump used in the anti-lock brake system of FIG. 2, according to a first embodiment of the present invention.

As shown in FIG. 3, the pump for the anti-lock brake systems according to the first embodiment of the present invention is installed in a bore 70 which is formed in a modulator block 30. To fabricate the pump, a plug 40 and a piston 50 are inserted in the bore 70 on a side of a drive motor 10. In a detailed description, the piston 50 is installed in the bore 70 of the modulator block 30 so as to rectilinearly reciprocate in the bore 70 by an eccentric rotation of an eccentric shaft of the drive motor 10. The plug 40 is mounted to the bore 70 to be opposite to the piston 50. The pump further includes a first sealing member 22 and a backup ring 23. The first sealing member 22 is placed around an outer circumferential surface of the piston 50, thus preventing a leakage of brake oil through a junction between an inner circumferential surface of the bore 70 and the outer circumferential surface of the piston 50. The backup ring 23 is fitted over the outer circumferential surface of the piston 50 at a position close to the first sealing member 22, thus preventing excessive wear of the first sealing member 22.

The pump further includes a return spring 21 which is placed between the piston 50 and the plug 40 in the bore 70 to elastically return the piston 50 to an original position thereof during a reciprocating motion within the bore 70. Both ends of the return spring 21 are respectively stopped by a first end of the plug 40 and a stepped end of the piston 50 which face each other, thus elastically biasing the piston 50 in a predetermined direction away from the plug 40.

The plug 40 is mounted to the bore 70 to be opposite to the piston 50, as described above. The plug 40 has an inlet port 31, an inlet path 41, a closing body 37, and an inlet valve seat 36. The inlet port 31 is provided on a predetermined intermediate portion of the plug 40 to draw the brake oil from a low-pressure accumulator 29a into the pump, during an oil-drawing mode. The inlet path 41 is axially formed in the plug 40 while extending from the inlet port 31, thus guiding the brake oil from the inlet port 31. The inlet path 41 has an enlarged diameter part 41a at a predetermined position thereof, with the closing body 37 installed in the enlarged diameter part 41a of the inlet path 41 to open or close the inlet path 41. The inlet valve seat 36 is provided on an inlet end of the enlarged diameter part 41a of the inlet path 41 to be in contact with the closing body 37, thus opening or closing the inlet path 41 in conjunction with the closing body 37. The plug 40 further includes a support ring 38 and a spring retainer 39 which are provided in the enlarged diameter part 41a of the inlet path 41 to be opposite to the inlet valve seat 36. The support spring 38 elastically biases the closing body 37 toward the inlet valve seat 36. The spring retainer 39 maintains both the closing body 37 and the support spring 38 within the enlarged diameter part 41a of the inlet path 41.

The plug 40 further includes an outlet path 42 and an outlet port 32. The outlet path 42 is defined between the inner circumferential surface of the bore 70 and an outer circumferential surface of the plug 40 to guide the brake oil from the pump to the outside during an oil-discharging mode. The outlet port 32 discharges the brake oil from the outlet port 42 to a high-pressure accumulator 29b which is provided in the anti-lock brake system to attenuate a pressure pulsation of the brake oil pumped from the low-pressure accumulators 29a by the pump.

The pump further includes an outlet check valve 34 which is installed in the outlet path 42 to open or close the outlet path 42, in response to a pressure of the brake oil acting on the outlet check valve 34. The outlet check valve 34 is a ring-shaped elastic body, with an annular groove formed along a central line of an end surface of the ring-shaped elastic body, so that the outlet check valve 34 is elastically deformed and elastically restores an original shape thereof according to the pressure of the brake oil. In a normal state of the pump wherein the pressure of the brake oil acting on the outlet check valve 34 is not higher than a predetermined reference level, the outlet check valve 34 is in contact with the inner circumferential surface of the bore 70 at an outside part thereof, and in contact with the outer circumferential surface of the plug 40 at an inside part thereof. In the above state, the outside part and the inside part of the outlet check valve 34 are sectioned, based on the annular groove of the outlet check valve 34. When the pressure of the brake oil acting on the outlet check valve 34 increases over the predetermined reference level, the outside part of the outlet check valve 34 is elastically deformed inward in a radial direction while compressing the annular groove of the outlet check valve 34, thus defining an oil channel between the inner circumferential surface of the bore 70 and an outer circumferential surface of the outside part of the outer valve 34. The brake oil thus flows through the oil channel to reach the outlet path 42. In the first embodiment of the present invention, a radial flange 43 is formed around the first end of the plug 40 to define a ring-shaped groove around the outer circumferential surface of the plug 40. The outlet check valve 34 is installed in a ring-shaped space which is defined by the inner circumferential surface of the bore 70 and the ring-shaped groove of the plug 40. The pump further includes a second sealing member 35 which is placed around the outer circumferential surface of the plug 40, thus preventing a reverse flow of the brake oil toward the inlet path 41 through a junction between the inner circumferential surface of the bore 70 and the outer circumferential surface of the plug 40.

The operation and effect of the pump for the anti-lock brake systems according to the present invention will be described herein below.

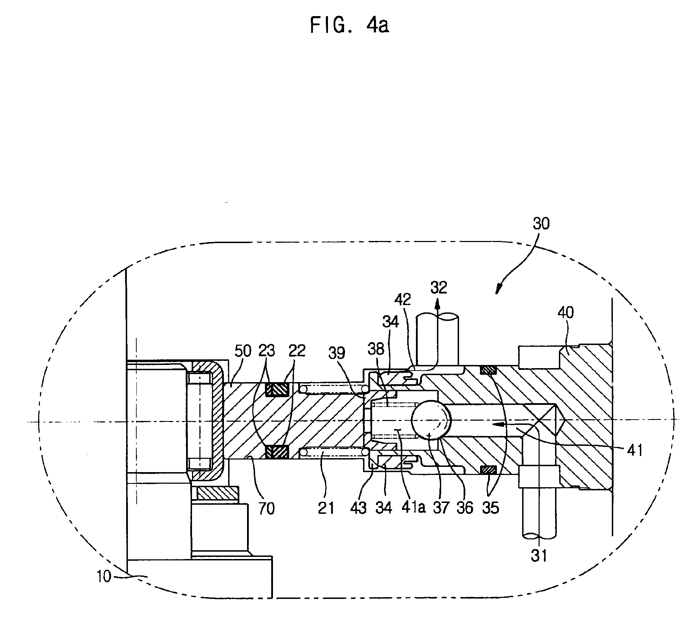

During the operation of the pump, the piston 50 rectilinearly reciprocates in the bore 70 of the modulator block 30 by an eccentric rotation of the eccentric shaft of the drive motor 10. When the piston 50 reaches a top dead center, as shown in FIG. 4A, the return spring 21 is compressed, and the pressure of the brake oil in the space between the stepped end of the piston 50 and the closing body 37 increases. Due to the increasing pressure of the brake oil, the closing body 37 supported by the support spring 38 closes the inlet valve seat 36.

As the pressure of the brake oil acting on the outlet check valve 34 increases as described above, the outside part of the outlet check valve 34 is elastically deformed inward in the radial direction while compressing the annular groove of the outlet check valve 34. The outer circumferential surface of the outside part of the outer valve 34 is thus spaced apart from the inner circumferential surface of the bore 70, thereby opening the outlet path 42 through which the brake oil flows to be pumped to the high-pressure accumulator 29b from the outlet port 32. The pump thus accomplishes an oil-discharging mode.

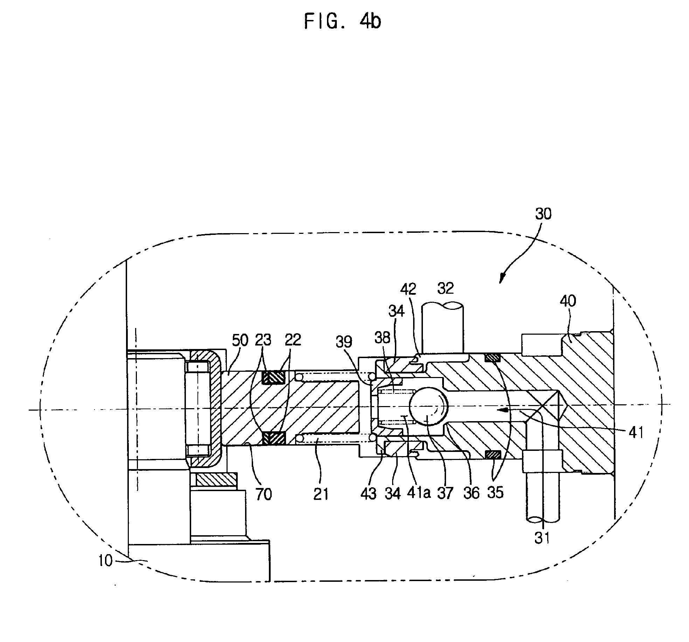

However, when the piston 50 reaches a bottom dead center during the operation of the pump, as shown in FIG. 4B, the return spring 21 elastically restores the original shape thereof, and the pressure of the brake oil in the space between the stepped end of the piston 50 and the closing body 37 reduces. Due to the reducing pressure of the brake oil, the closing body 37 opens the inlet valve seat 36. The brake oil is thus drawn from the low-pressure accumulator 29a into the space between the piston 50 and the outlet check valve 34 through both the inlet port 31 and the inlet path 41. The pump thus accomplishes an oil-drawing mode. Because the pressure of the brake oil contained in the space between the piston 50 and the closing body 37 is reduced under the predetermined reference level during the oil-drawing mode, the outlet check valve 34 elastically restores its original shape, thus bringing the outer circumferential surface of the outside part of the outlet check valve 34 into close contact with the inner circumferential surface of the bore 70. Therefore, the outlet check valve 34 prevents a reverse flow of the discharged brake oil through the outlet path 42.

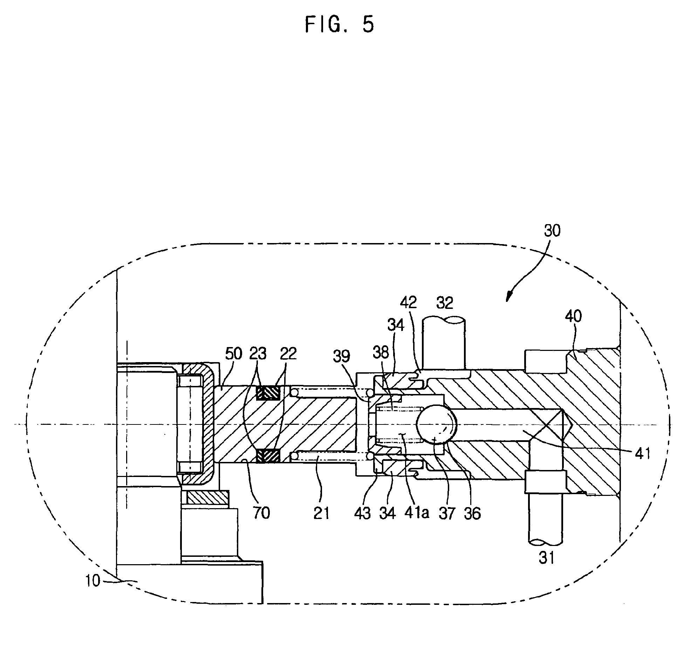

In the present invention, the second sealing member 35 placed around the outer circumferential surface of the plug 40 may be removed as shown in FIG. 5, when the outer circumferential surface of the plug 40 is in contact with the inner circumferential surface of the bore 70 while accomplishing a desired sealing effect.

As apparent from the above description, the present invention provides a pump for anti-lock brake systems. In the pump of the present invention, an elastic outlet check valve having an annular groove is placed around a plug. Therefore, the pump uses only one closing body in the inlet and outlet check valves, different from conventional pumps having two closing bodies in the inlet and outlet check valves. The pump of the present invention thus has a simple construction, resulting in a reduction in the production costs.

Because the outlet check valve of the pump according to the present invention is made of an elastic material, the pump reduces operational noise caused by wear of sealing members, and has improved durability. In addition, the outlet check valve is elastically deformed in response to a variation in the pressure of brake oil, thus preventing a reverse flow of the brake oil in the pump.

Furthermore, because the pump of the present invention uses only one closing body in the inlet and outlet check valves, there does not occur partial side wear on the valve seat or on the closing body, regardless of repeated operations of the pump. Therefore, the pump is free from the generation of air bubbles in the brake oil, thus enhancing the pumping efficiency and further attenuating the operational noise.

Another advantage of the pump according to the present invention resides in that the pump has a second sealing member around the plug, thus preventing a reverse flow of the brake oil toward the inlet path. The second sealing member may be removed from the pump, when the outer circumferential surface of the plug is in contact with the inner circumferential surface of the bore while accomplishing a desired sealing effect.

Although a few preferred embodiments of the present invention have been shown and described, it would be appreciated by those skilled in the art that changes may be made in these embodiments without departing from the principles and spirit of the invention, the scope of which is defined in the claims and their equivalents.

## Claims

1. A pump for anti-lock brake systems, comprising:
a piston installed in a bore of a modulator block so as to rectilinearly reciprocate in the bore by an eccentric rotation of an eccentric shaft of a drive motor;
a plug mounted to the bore to be opposite to the piston;
a return spring placed between the piston and the plug to elastically bias the piston in a predetermined direction relative to the plug;
an outlet path defined between an inner circumferential surface of the bore and an outer circumferential surface of the plug; and
an outlet check valve installed in the outlet path, the outlet check valve being elastically deformed to discharge brake oil during an oil-discharging mode, and elastically restoring an original shape thereof to prevent a reverse flow of the discharged brake oil during an oil-drawing mode.

2. The pump according to claim 1, wherein the outlet check valve comprises a ring-shaped elastic body, with an annular groove formed along a central line of an end surface of the ring-shaped elastic body, so that the outlet check valve is elastically deformed and elastically restores the original shape thereof, according to a pressure of the brake oil acting on the outlet check valve.

3. The pump according to claim 1, wherein the plug comprises:
an inlet port to draw the brake oil into the pump;
an inlet path to guide the brake oil from the inlet port;
a closing body installed in an enlarged diameter part of the inlet path to open or close the inlet path;
an inlet valve seat provided on a predetermined intermediate portion of the inlet path to be in contact with the closing body, thus opening or closing the inlet path in conjunction with the closing body;
a support spring to elastically bias the closing body in a predetermined direction; and
a spring retainer to maintain both the closing body and the support spring within the enlarged diameter part of the inlet path.

4. The pump according to claim 1, further comprising:
a sealing member placed around the outer circumferential surface of the plug, thus preventing a leakage of the brake oil through a junction between the inner circumferential surface of the bore and the outer circumferential surface of the plug.
